# EUROPEAN PATENT SPECIFICATION

(11) **EP 0 470 650 B1**
(45) Date of publication and mention of the grant of the patent: **12.02.1997**
(21) Application number: 91117429.0
(22) Date of filing: 14.04.1989
(51) Int. Cl.: C08F 220/06, C08F 2/32, C04B 40/00, C08F 8/00

(54) **Water-absorbent polymer and its method of production**
Wasserabsorbierendes Polymer und Verfahren zu seiner Herstellung
Polymère absorbant de l'eau et méthode de sa production

(30) Priority: 16.04.1988 JP 94308/88
(43) Date of publication of application: 12.02.1992
(62) Divisional of application: 89303747.3
(73) Proprietor: OOSAKA YUUKI KAGAKU KOGYO KABUSHIKI KAISHA, Oosaka-shi Oosaka-fu (JP)
(72) Inventor: Kanbayashi, Taiji, Yamatotakada-shi, Nara-ken (JP); Kato, Chuzo, Tokyo (JP)
(74) Representative: Hale, Stephen Geoffrey

(56) References cited:
- GB-A- 1 482 515
- GB-A- 2 126 591

## Description

This invention relates to a water-absorbent polymer and a method for its production. The polymer is useful in a production method of for water in particulate form (fine-grain ice or dry clathrate water) for the manufacture of concrete/mortar, and in a production method of concrete/mortar by using fine-grain particulate (ice or dry clathrate) water, as disclosed in European Patent Application No. 89303747.3 (EP-A-338,739), of which this is a divisional application.

As disclosed in the parent application, when fine-grain ice or dry clathrate water is used for cement mixtures, concrete/mortar can be easily manufactured using a small amount of water if the fine-grain ice is made in such a manner that water is impregnated into a water-absorbent polymer, capable of keeping independent fine grains by incorporating water in the structure in the water-absorbing state, to freeze, and if the dry clathrate water is made in such a manner that water is impregnated into a water-absorbent polymer.

The method for producing fine-grain ice or dry clathrate water for manufacture of concrete/mortar in the invention claimed in the parent application has the following advantages:
1) fine-grain ice or dry clathrate water particles having stable particle size can be easily manufactured;
2) it is unnecessary to keep fine-grain ice at low temperature until it is used and it can be used as it is or by freezing just before admixture;
3) it is unnecessary for the manufacture to take place on site and manufacture can be readily performed at any desired place and time;
4) the method can be readily applied to an existing ready-mixed concrete plant; and
5) water can be transported as fine particles to places where it is impossible to supply liquid water.

The method of producing concrete/mortar in the invention claimed in the parent application has the following advantages:
1) high-strength concrete/mortar of low water/cement ratio can be easily manufactured;
2) continuous production by extrusion molding and roller molding is easy and products can be readily enlarged in length; and
3) because a water-absorbent polymer is mixed in, a very good effect can be achieved in the prevention of surface dew condensation and efflorescence.

According to the present invention there is provided a water-absorbent polymer in particulate form capable of absorbing water by clathration, characterised in that the water-absorbent polymer is an acrylic polymer based on partially neutralised acrylic acid, and the surfaces of the polymer particles are modified, so that the polymer particles retain their independent particulate form and are able to move past each other even after absorption of water, by incorporation of a polymeric dispersing agent comprising an acrylic copolymer linked to the water-absorbent polymer by a cross-linking reaction in the preparation of said polymer using an amount of cross-linking agent which is from 0.05 to 2 weight percent relative to the amount of the partially neutralized acrylic acid.

The invention also provides a method for the production of a water-absorbent polymer capable of absorbing water by clathration, which comprises:
(1) dissolving an acrylic copolymer as dispersing agent in a liquid aliphatic hydrocarbon; said acrylic copolymer being formed from the following components:
   a) an alkyl acrylate or methacrylate monomer having an alkyl group of eight carbon atoms or more, in an amount of 40 to 95 weight percent,
   b) one or more hydrophilic monomers selected from acrylic acid and derivatives, methacrylic acid and derivatives, acrylamide and derivatives and methacrylamide and derivatives, all containing a carboxyl, amino, quaternary ammonium or hydroxyl group, in an amount of 5 to 40 weight percent and
   c) unsaturated monomer copolymerisable with the components (a) and (b) in an amount of 0 to 40 weight percent;
(2) partially neutralizing an acrylic acid monomer in aqueous solution with an alkali to form an aqueous solution of partially neutralized acrylic acid;
(3) dispersing the aqueous solution of partially neutralized acrylic acid obtained in (2) in the solution of acrylic copolymer obtained in (1), in amounts such that the amount of acrylic copolymer of (1) is 0.1 to 10 weight percent relative to the amount of the partially neutralized acrylic acid of (2) and polymerizing the acrylic acid by W/O suspension polymerization;
(4) subjecting the particulate polymer obtained in (3) to a cross-linking reaction with a cross-linking agent in an amount of 0.05 to 2 weight percent relative to the amount of the partially neutralized acrylic acid in the presence or absence of an inorganic compound; and
(5) drying the polymer particles, whereby the polymer particles retain their independent particulate form and are able to move past each other even after absorption of water.

Alkyl acrylates or alkyl methacrylates for the component (a) for production of the acrylic copolymer dispersing agent having a carbon number of the alkyl group of 8 or more which are on sale and readily available include 2-ethylhexyl acrylate, 2-ethylhexyl methacrylate, lauryl acrylate, lauryl methacrylate, tridecyl acrylate, tridecyl methacrylate, a mixture of lauryl acrylate and tridecyl acrylate, stearyl acrylate and stearyl methacrylate.

For polymers formed from different components (a), the higher their glass transition point the less likely is beads blocking to occur when the dispersing agent is synthesized in O/W type suspension polymerization. Therefore, it is preferable to use polymers of relatively high glass transition point. The glass transition point of polymers from some monomers is shown in Table 1 which follows.

**Table 1**

| ALKYL GROUP | CARBON NUMBER OF ALKYL GROUP | ACRYLIC ESTER GLASS TRANSITION POINT | METHACRYLIC ESTER GLASS TRANSITION POINT |
|---|---|---|---|
| 2-ETHYLHEXYL | 8 | -85°C | -10°C |
| LAURYL | 12 | +15°C | -65°C |
| LAURYL,TRIDECYL | 12,13 | >+15°C | <46°C |
| TRIDECYL | 13 | +20°C | -46°C |
| STEARYL | 18 | >+35°C | +38°C |

Preferred monomers therefore are 2-ethylhexyl methacrylate, lauryl acrylate, mixtures of lauryl acrylate and triedecyl acrylate, tridecyl acrylate, stearyl acrylate and stearyl methacrylate.

Acrylic acid and derivatives, methacrylic acid and derivatives, acrylamide and derivatives and methacrylamide and derivatives containing carboxyl groups, amino groups, quaternary ammonium groups or hydroxyl groups for the component (b) include acrylic acid, methacrylic acid, itaconic acid, dimethylaminoethyl acrylate, dimethylaminoethyl methacrylate, diethylaminoethyl acrylate, diethylaminoethyl methacrylate, acryloyloxyethyltrimethylammonium chloride, methacryloyloxyethyltrimethylammonium chloride, 2-hydroxyethyl acrylate, 2-hydroxyethyl methacrylate, 2-hydroxypropyl acrylate, 2-hydroxypropyl methacrylate, acrylamide, dimethylacrylamide, dimethylaminopropylacrylamide, dimethylaminopropylmethacrylamide, acrylamidepropyltrimethylammonium chloride and methacrylamidepropyltrimethylammonium chloride.

Monomers for the component (c) are alkyl methacrylates having a high glass transition point and having affinity with aliphatic hydrocarbon solvents. Monomers in which the carbon number of the alkyl group is less than 5 and vinyl acetate are mentioned. For instance, methyl methacrylate, ethyl methacrylate, isopropyl methacrylate, n-butyl methacrylate, isobutyl methacrylate and vinyl acetate are given and methyl methacrylate, ethyl methacrylate and isobutyl methacrylate may be used.

The ratio of the components (a), (b) and (c) largely influences dispersion solubility in aliphatic hydrocarbon solvents, colloid dispersibility of polymerization and the properties of the water-absorbent polymer, for instance its water absorbency, particle independence when water is absorbed, particle strength and particle size.

In general, the amounts used are component (a) 40-95 weight percent, component (b) 5-40 weight percent and component (c) 0-40 weight percent, for good results. Preferred amounts are component (a) 45-70 weight percent, component (b) 5-25 weight percent and component (c) 20-40 weight percent. In cases where component (a) is present in an amount less than 40 weight percent the dispersion solubility to solvent is lowered. In cases where component (a) is present in an amount of more than 95 weight percent, the colloid dispersibility relatively gets worse when component (b) is present in an amount of less than 5 weight percent. In both cases, it is difficult to continue W/O type suspension polymerization. With component (a) the higher the percentage by weight is in the range between 40 and 95, the better are the dispersion solubility to solvent, the particle independence of the water-absorbent polymer when water is absorbed and the particle strength. In cases where component (b) is present in an amount of less than 5 weight percent, the colloid dispersibility gets worse as described before. In cases where component (b) is present in an amount of more than 40 weight percent, the dispersion solubility to solvent is lowered. In both cases, it is difficult to continue W/O type suspension polymerization.

With component (b) the higher the percentage by weight is in the range between 5 and 40, the better are the colloid dispersibility of polymerization and the water-absorbing rate of the water-absorbent polymer. On the other hand, the particle independence when water is absorbed and the particle strength are lowered and the particle size gets finer. In the case where component (c) is present in an amount of more than 40 weight percent, the ratio of the component (a) is relatively lowered and the dispersibility to solvent gets worse. The higher the percentage by weight is in the range between 0 and 40, the higher the particle strength of the water-absorbent polymer is.

Acrylic copolymer which is used as dispersing agent in the present invention is synthesized by means of an O/W type suspension polymerization method. In solution polymerization, there are a few cases where solvent remains or the function as dispersing agent is inferior by low molecular weight polymer. An example of an O/W type suspension polymerization method is as follows. Partially saponified polyvinyl alcohol is heated and dissolved in ion exchange water, after the atmosphere is replaced with N₂, a solution in which an initiator of azo type or peroxide type is dissolved is dropped into and dispersed in the monomer components (a), (b) and (c) and the polymerization is finished by continuing heating. After cooling, solid matter is filtered and washed and bead-like acrylic copolymer, i.e. dispersing agent, is obtained by drying under reduced pressure.

The dispersing agent obtained by the above-described method is dispersed into and dissolved in the aliphatic hydrocarbon solvent of W/O type suspension polymerization. The quantity of dispersing agent is used in the 0.1 to 10 weight percent range relative to acrylic acid and its alkali metal salt monomer and a preferred range is 0.5 to 5 weight percent. When the quantity of dispersing agent is less than 0.1 weight percent, the colloid dispersibility of polymerization is labilized. When it is more than 10 weight percent, the fineness of particle size becomes an economic disadvantage.

The aqueous solution of acrylic acid and its alkali metal salt for the present invention is adjusted in such a manner that the acrylic acid monomer is partially neutralized by means of an aqueous solution such as sodium hydroxide and potassium hydroxide. It is preferred in consideration of water absorbency power and safety that the degree of neutralization is 60% to 85%. The concentration of monomer in aqueous solution is 35 to 75 weight percent, preferably 40 to 70 weight percent.

In the present invention, it is not a problem that unsaturated monomer capable of copolymerizing with acrylic acid and its acrylic acid alkali metal salt monomer is copolymerized with acrylic acid and its acrylic acid alkali metal salt monomer during the manufacture of water-absorbent polymer.

In the case where acrylic acid is polymerized with its alkali metal aqueous solution by a W/O type suspension polymerization method in the present invention, the initiator is a self-cross-linking type in which cross-linking agent monomer is not used. Therefore, the preferred initiator is a water-soluble persulfate such as potassium persulfate, ammonium persulfate and hydrogen peroxide. The quantity of initiator used is 0.1 to 2.0 weight percent relative to monomer, preferably 0.2 to 1.0 weight percent.

The aliphatic hydrocarbon solvent for W/O type suspension polymerization in the present invention is an aliphatic hydrocarbon such as n-pentane, n-hexane, n-heptane and n-octane, or an alicyclic hydrocarbon such as cyclohexane, methylcyclohexane and decalin. Preferred hydrocarbons are n-hexane, n-heptane and cyclohexane.

When the water-absorbent polymer is manufactured in accordance with the present invention, the other important factor is that the cross-linking reaction is performed by means of a cross-linking agent in the presence or in the absence of an inorganic compound after W/O type suspension polymerization.

The cross-linking agent for use in the present invention may be a compound having two or more functional groups capable of responding to a carboxyl group or carboxylate group. Typical cross-linking agents include a polyglycidyl ether such as ethylene glycol diglycidyl ether, polyethylene glycol diglycidyl ether or glycerin triglycidyl ether, a haloepoxy compound such as epichlorohydrin or α-methyl chorohydrin, and polyaldehydes such as glutaraldehyde and glyoxal. The preferred agent is ethylene glycol glycidyl ether.

The amount of cross linking-agent added depends on the type of cross-linking agent and the type of dispersing agent and the range is usually 0.05 to 2 weight percent relative to acrylic acid and its alkali metal salt monomer. When the amount of the above-described cross-linking agent used is less than 0.05 weight percent, the particle independence when water is absorbed and the particle strength are less good. When it is more than 2 weight percent, the cross-linking density is too high. Therefore, the water absorbency is remarkably lowered.

In the cross-linking reaction, the particle independence when water is absorbed is improved if an inorganic compound is used. The inorganic compound may be for instance, white carbon, talc, hydrotalcite, and pulverized silica (commercially available under the trademark "Aerosil" made by NIPPON AEROSIL KABUSHIKI KAISHA). On this occasion, there is no problem if a surface active agent is added. Any well-known nonionic surface active agent may be used.

The method of cross-linking reaction is to add cross-linking agent during azeotropic distillation and heating and drying under reduced pressure as is well-known. Addition during azeotropic distillation is easy.

The water-absorbent polymer according to the present invention is different from commercially produced polymers and shows particle independence when water is absorbed. The higher the amount of the component (a) of the acrylic copolymer as dispersing agent is and the higher the amount of the cross-linking agent is, the more effects are taken. It can therefore be presumed that slip of water-absorbed polymer concerns the above-described particle independence. The component (a) of the dispersing agent upgrades the water repellency of the water-absorbed polymer and, by upgrading the cross-linking rate of the polymer, the cross-linking agent increases the water-absorbing rate and decreases surface tackiness. By these effects, the water-absorbed bead-like polymer slips each other, gets pore and appears particle independence and flowability since water as binder is sparse.

Fine grain ice for production of concrete/mortar is obtained in such a manner that the above-mentioned water-absorbent polymer absorbs the necessary quantity of water to freeze so as to keep its independent fine grain. It is easily manufactured. Water can be absorbed up to the water absorbency of the polymer (100 to 200 times the water-absorbent polymer weight in ion-exchange water). Dry clathrate water for production of concrete/mortar is obtained only in such a manner that the above-mentioned water-absorbent polymer absorbs the necessary quantity of water. It is desirable that the amount of water to be absorbed is less than half of the water absorbency of the polymer in order to keep its independent fine grain.

The particle size of the fine grain ice or dry clathrate water produced can be freely varied in the 0.03 to 3.0 mm range by changing the particle size of the water-absorbent polymer and the amount of water to be absorbed and can be selected in accordance with working conditions when cement is mixed.

Concrete/mortar is manufactured in such a manner that fine grain ice or dry clathrate water is mixed with cement or cement and aggregate in powder condition and water is expelled to the outer portion by means of pressure molding or extrusion molding so as to cause hydration with surrounding cement. The method concerned is illustrated in the Use Examples which follow.

Water absorbency, particle size and particle independence when water is absorbed were determined by the following methods.

The value of the water absorbency for ion-exchange water was obtained by a method in which 0.5g of dry polymer was dissipated in 1 litre of ion-exchange water, the swelling polymer weight (W) obtained by filtering by means of 80-mesh wire gauze after standing for twenty-four hours was measured and this value was divided by the original dry polymer weight (Wo). That is to say, it was decided that the water absorbency for ion-exchange water (g/g) was W/Wo.

The value of the water absorbency for 0.9% salt water was obtained by a method in which 0.2g of dry polymer was dispersed in 60g of 0.9% salt water, the swelling polymer weight (W) obtained by filtering by means of 100-mesh wire gauze after standing for twenty minutes was measured and this value was divided by the original dry polymer weight (Wo). That is, it was decided that the water absorbency for 0.9% salt water (g/g) was W/Wo.

The particle size of the water-absorbent polymer (in a dry condition) was measured by means of an automatic grading distribution measuring apparatus CAPA-300 made by HORIBA SEISAKUSHO KABUSHIKI KAISHA by using a decanter method. It was decided that the median on the basis of area should be considered to be the particle size.

It was decided that the particle size of the water-absorbed polymer was the average obtained on a basis of the photographing of an optical microscope after 50ml of ion exchange water was added to 1.0g of dry polymer and the polymer absorbed all the added amount of water. The particle independence when water was absorbed was judged by the following standard.
- o:: Each particle is independent and has flowability
- △:: Each particle is partially dependent and inferior in flowability.
- x:: Each particle shows gelation dependence perfectly and has no flowability.

Composition Examples illustrating the production of dispersing agent (acrylic copolymer) follow.

### Composition Example 1

150g of ion-exchange water was fed into a 500 ml separable flask equipped with an agitator, a reflux condenser, a dropping funnel, a thermometer and a nitrogen gas introduction tube. 0.2g of partially saponified polyvinyl alcohol (GH-23 made by NIHON GOHSEI KAGAKU KABUSHIKI KAISHA) was added as dispersing agent and the atmosphere was replaced with N₂ after heating and dissolution.

1.0g of azobisdimethylvaleronitrile was added to 32.5g of a mixture of lauryl acrylate and tridecyl acrylate (LTA made by OHSAKA YUKI KAGAKU KABUSHIKI KAISHA), 10.0g of hydroxy ethyl methacrylate and 17.5g of methyl methacrylate in a conical flask in advance to dissolve. The dissolved product was dripped into the above-mentioned separable flask for one hour under bubbling nitrogen and the product was kept for 5 hours at 65°C, until the reaction was finished. The solid matter was filtered after cooling to wash and to dry under reduced pressure. A bead-like dispersing agent (1) was obtained.

### Composition Example 2

A bead-like dispersing agent (2) was obtained by operating in the same way as Composition Example 1 except using 25.0g of a mixture of lauryl acrylate and tridecyl acrylate, 5.0g of methacrylic acid, 5.0g of dimethylaminoethyl methacrylate and 17.5g of methyl methacrylate.

### Composition Example 3

A bead-like dispersing agent (3) was obtained by operating in the same way as Composition Example 1 except using 30g of stearyl methacrylate, 10.0g of dimethylaminopropyl methacrylamide and 10.0g methyl methacrylate.

Examples illustrating the production of water-absorbent polymer follow.

### Example 1

360.7g of n-hexane and 4.32g of dispersing agent (1) were fed into a 1 litre separable flask equipped with an agitator, a reflux condenser, a dropping funnel, a thermometer and a nitrogen gas introduction tube, the temperature was raised to 50°C to disperse and dissolve the ingredients and the atmosphere was replaced with N₂.

72.0g ofacrylic acid was partially neutralized by means of 32.2g of sodium hydroxide dissolved in 103.6g of ion exchange water in a conical flask and 0.24g potassium persulfate was dissolved in under room temperature. This monomer aqueous solution was dripped into the above-described separable flask under bubbling nitrogen at an agitation speed of 300 rpm for one hour. After refluxing for two hours, 0.1g of 30% aqueous hydrogen peroxide was added and polymerization was completely by continuing reflux for an hour. Thereafter, 0.73g of ethylene glycol diglycidyl ether was added and azeotropic distillation carried out to dryness under reduced pressure after filtration. A white bead-like polymer was obtained. And, there was little attachment of polymer in the separable flask.

The obtained dry polymer had a water absorbency to ion-exchange water of 125 (g/g), a water absorbency to 0.9% salt water of 33 (g/g), a particle size in dry condition of 120µm and a particle size when water was absorbed of 480µm. It also showed particle independence when water was absorbed.

### Examples 2 and 3

White bead-like polymer was obtained by operating in the same way as Example 1 except using the dispersing agents (2) and (3) obtained in the Composition Examples 2 and 3 instead of the dispersing agent (1) of Composition Example 1. There was little attachment of polymer in the separable flask.

### Example 4

White bead-like polymer was obtained by operating in the same way as Example 1 except using cyclohexane instead of n-hexane of Example 1. There was little attachment of polymer in the separable flask.

### Examples 5-6

White bead-like polymer was obtained by operating in the same way as Example 1 except altering the 0.73g of ethylene glycol diglycidyl ether in Example 1 to 0.18g and 1.46g respectively. There was little attachment of polymer in the separable flask.

### Comparison Example 1

White bead-like polymer was obtained by operating in the same way as Example 1 but omitting the ethylene glycol diglycidyl ether of Example 1. There was little attachment of polymer in the separable flask.

### Comparison Example 2

White powdery polymer was obtained by operating in the same way as Example 1 using sorbitan monolaurate instead of the dispersing agent (1) of Example 1. Attachment of polymer appeared at the wall surface and the agitating blade in the separable flask.

### Comparison Example 3

Commercially available material, namely, AQUALIC CA-W (made by NIHON SHOKUBAI KAGAKU KOGYO KABUSHIKI KAISHA)

The result of the evaluation in the Examples 1 to 6 and the comparison Examples 1 to 3 is shown in Table 2.

**Table 2**

| SAMPLE NO. | WATER ABSORBENCY (g/g) | | PARTICLE SIZE OF DRY POLYMER (µm) | PARTICLE SIZE WHEN WATER IS ABSORBED (mm) | PARTICLE INDEPENDENCE WHEN WATER IS ABSORBED |
|---|---|---|---|---|---|
| | ION EXCHANGE WATER | 0.9 SALT WATER | | | |
| EXAMPLE-1 | 125 | 33 | 120 | 0.48 | ○ |
| 2 | 110 | 30 | 50 | 0.20 | ○ |
| 3 | 150 | 33 | 170 | 0.62 | ○ |
| 4 | 180 | 35 | 90 | 0.30 | ○ |
| 5 | 200 | 35 | 100 | 0.31 | ○ |
| 6 | 80 | 26 | 120 | 0.45 | ○ |
| COMPARISON EXAMPLE-1 | 540 | 58 | 110 | 0.39 | △ |
| 2 | 160 | 37 | MEASUREMENT IMPOSSIBLE (THE SECOND CONDENSATION) | MEASUREMENT IMPOSSIBLE | X |
| 3 | 260 | 42 | 500 | 1.6 | X |

Examples of the use of the water-absorbent polymer in the production of fine grain ice and concrete/mortar follow.

### Use Example A (fine grain ice)

100kg of drinking water was fed in a 100 litre vessel equipped with an agitator and 1.0kg of the water-absorbent polymer of Example 1 was gradually added during agitation. After water was absorbed, agitation was stopped and the fine grain polymer which absorbed water was ejected to freeze. Then, the frozen polymer became independent fine grain ice by simple mechanical operation and was agitated by a mixer in the following proportioning ratio and mortar was manufactured.
cement : fine grain ice : quartz sand (bone dry) = 100 : 28 : 20

This mortar was formed into a plate which was 50mm wide and 12mm thick by a vacuum deaeration type extrusion molding machine. Five specimens each 350mm long were made by using this plate and a bending tension test was performed after curing at room temperature for 14 days. On this occasion, the bending tension strength (kg/cm²) was 185.3, 211.1, 237.2, 191.0 and 177.9 and the average was 200.5 kg/cm².

### Use Example B (fine grain ice)

After water was absorbed, powder mixing was performed in the following ratio by using frozen fine grain polymer by the same method as the above-described one.
cement : fine grain ice : quartz sand (bone dry) = 100 : 24 : 20
Thereafter, a plate which was 50mm wide and 12mm thick was formed by means of a vacuum deaeration type extrusion molding machine. The bending tension strength (kg/cm²) of this plate which was cured for 14 days at 20°C in a room was 249.5, 220.1 and 220.3 and the average was 230.0kg/cm².

### Use Example C (fine grain ice)

After water was absorbed, powder mixing was performed in the following ratio by using the frozen fine grain polymer in the same manner as mentioned above to form a plate by a vacuum deaeration type extrusion molding machine.
cement : fine grain ice : quartz sand (bone dry) = 100 : 32 : 20
On this occasion, the bending tension strength (kg/cm²) of this plate after curing at 20°C in a room for 14 days was 176.8, 157.0 and 146.1 and the average was 160.0 kg/cm².

### Use Example D (dry clathrate water)

50kg of drinking water was fed into a 100 litre vessel equipped with an agitator and 1.0kg of water-absorbing polymer was gradually added during agitation. After water was absorbed, agitation was stopped to manufacture dry clathrate water. By using this dry clathrate water, agitation was performed by means of a mixer in the following proportioning ratio to manufacture mortar.
cement : dry clathrate water : quartz sand (bone dry) = 100 : 28 : 20

The bending test result of the plate manufactured and cured in the same manner as the above-mentioned Use Example A by using this mortar was 218.4, 179.5 and 180.9 kg/cm² and the average was 192.9 kg/cm².

### Use Example E (dry clathrate water)

The same method as in Use Example D was performed except that the proportioning ratio was
cement : dry clathrate water : quartz sand (bone dry) = 100 : 24 : 20

The bending test result of the plate was 241.5, 216.8 and 206.3 kg/cm2 and the average was 221.5 kg/cm².

### Use Example F (dry clathrate water)

The same method as Example D was performed except that
cement : dry clathrate water : quartz sand (bone dry) = 100 : 32 : 20

The bending test result of the plate was 166.3, 147.0 and 146.1 kg/cm² and the average was 153.1 kg/cm².

## Claims

1. A water-absorbent polymer in particulate form capable of absorbing water by clathration, characterised in that the water-absorbent polymer is an acrylic polymer based on partially neutralised acrylic acid, and the surfaces of the polymer particles are modified so that the polymer particles retain their independent particulate form and are able to move past each other even after absorption of water, by incorporation of a polymeric dispersing agent comprising an acrylic copolymer linked to the water-absorbent polymer by a cross-linking reaction in the preparation of said polymer using an amount of cross-linking agent which is from 0.05 to 2 weight percent relative to the amount of the partially neutralized acrylic acid.

2. A particulate water-absorbent polymer according to claim 1, characterised in that the water-absorbent acrylic polymer is obtained by water-in-oil suspension polymerisation in the presence of the acrylic copolymer polymeric dispersing agent.

3. A method for the production of a water-absorbent particulate polymer capable of absorbing water by clathration, which comprises:
(1) dissolving an acrylic copolymer as dispersing agent in a liquid aliphatic hydrocarbon; said acrylic copolymer being formed from the following components:
a) an alkyl acrylate or methacrylate monomer having an alkyl group of eight carbon atoms or more, in an amount of 40 to 95 weight percent,
b) one or more hydrophilic monomers selected from acrylic acid and derivatives, methacrylic acid and derivatives, acrylamide and derivatives and methacrylamide and derivatives, all containing a carboxyl, amino, quaternary ammonium or hydroxyl group, in an amount of 5 to 40 weight percent, and
c) unsaturated monomer copolymerisable with the components (a) and (b) in an amount of 0 to 40 weight percent;
(2) partially neutralizing an acrylic acid monomer in aqueous solution with an alkali to form an aqueous solution of partially neutralized acrylic acid;
(3) dispersing the aqueous solution of partially neutralized acrylic acid obtained in (2) in the solution of acrylic copolymer obtained in (1), in amounts such that the amount of the acrylic copolymer of (1) is 0.1 to 10 weight percent relative to the amount of partially neutralized acrylic acid of (2), and polymerizing the acrylic acid by W/O suspension polymerization;
(4) subjecting the particulate polymer obtained in (3) to a cross-linking reaction with a cross-linking agent in an amount of 0.05 to 2 weight percent relative to the amount of the partially neutralized acrylic acid in the presence or absence of an inorganic compound; and
(5) drying the polymer particles, whereby the polymer particles retain their independent particulate form and are able to move past each other even after absorption of water.

4. A method according to claim 3, characterized in that the cross-linking agent is ethylene glycol diglycidyl ether.

5. A method according to claim 3 or 4, characterized in that the acrylic polymer is formed from 45 to 70 weight percent of (a), 5 to 25 weight percent of (b) and 20 to 40 weight percent of (c).

6. A method according to any of claims 3 to 5, characterized in that the polymerisation of the partially neutralized acrylic acid is initiated by a self-cross-linking initiator used in an amount of 0.1 to 2.0 weight percent based on the partially neutralized acrylic acid.

7. A method according to any of claims 3 to 6, characterized in that the cross-linking is carried out in the presence of an inorganic compound selected from white carbon, talc, hydrotalcite and pulverised silica.

8. Particles of a water-absorbent polymer according to either of claims 1 and 2 or of a water-absorbent polymer produced by a method according to any of claims 3 to 7, containing absorbed water in an amount less than half their water absorbency but retaining their particulate form and able to move past one another without sticking.

9. Particles as claimed in claim 10, characterized in that they have a particle size from 0.03 to 3.0 mm.

## Patentansprüche

1. Auch durch Clathratbildung wasserabsorbierendes Polymer in Teilchenform, dadurch gekennzeichnet, daß es sich um ein Acrylpolymerisat auf Basis teilneutralisierter Acrylsäure handelt und die Polymerisatteilchen an den Oberflächen durch Einbindung eines durch eine schon während der Polymerisation erfolgenden Vernetzung mit einem in einer Menge von 0,05 bis 2 Gew.-%, bezogen auf die teilneutralisierte Acrylsäure, eingesetzten Vernetzungsmittel mit dem wasserabsorbierenden Polymerisat verknüpften Acrylcopolymerisat als Dispergiermittel so modifiziert sind, daß sie auch nach Wasserabsorption ihre unabhängige Teilchenform behalten und aneinander vorbeigleiten können.

2. Teilchenförmiges wasserabsorbierendes Polymer nach Anspruch 1, dadurch gekennzeichnet, daß man das wasserabsorbierende Acrylpolymerisat durch Wasser-in-ÖlSuspensionspolymerisation in Gegenwart des Acrylcopolymerisats als Dispergiermittel herstellt.

3. Verfahren zur Herstellung eines auch durch Clathratbildung wasserabsorbierenden teilchenförmigen Polymers, bei dem man
(1) ein Acrylcopolymerisat als Dispergiermittel in einem flüssigen aliphatischen Kohlenwasserstoff löst, wobei das Acrylcopolymerisat aus folgenden Komponenten aufgebaut ist:
a) einem Alkylacrylat oder -methacrylat mit einem Alkylrest von acht und mehr Kohlenstoffatomen in einer Menge von 40 bis 95 Gew.-%,
b) einem oder mehreren hydrophilen Monomeren aus der Reihe Acrylsäure und -derivate, Methacrylsäure und -derivate, Acrylamid und -derivate sowie Methacrylamid und -derivate, wobei jeweils eine Carboxyl-, Amino-, quartäre Ammonium- oder Hydroxylgruppe vorhanden ist, in einer Menge von 5 bis 40 Gew.-%, und
c) einem mit den Komponenten (a) und (b) copolymerisierbarem, ungesättigten Monomer in einer Menge von 0 bis 40 Gew.-%;
(2) Acrylsäure in wäßriger Lösung mit Alkali teilneutralisiert, wobei man eine wäßrige Lösung teilneutralisierter Acrylsäure erhält;
(3) die in (2) erhaltene wäßrige Lösung teilneutralisierter Acrylsäure in der in (1) erhaltenen Acrylcopolymerisatlösung in solchen Mengen dispergiert, daß das Acrylcopolymerisat gemäß (1) bezogen auf die Menge teilneutralisierter Acrylsäure gemäß (2) in einer Menge von 0,1 bis 10 Gew.-% vorliegt, und die Acrylsäure nach dem Verfahren der W/O-Suspensionspolymerisation polymerisiert;
(4) das in (3) erhaltene teilchenförmige Polymerisat mit 0,05 bis 2 Gew.-%, bezogen auf die teilneutralisierte Acrylsäure, eines Vernetzungsmittels vernetzt sowie
(5) die Polymerisatteilchen trocknet, wobei die erhaltenen Polymerisatteilchen auch nach Wasserabsorption ihre unabhängige Teilchenform behalten und aneinander vorbeigleiten können.

4. Verfahren nach Anspruch 3, dadurch gekennzeichnet, daß man als Vernetzungsmittel Ethylenglykoldiglycidylether einsetzt.

5. Verfahren nach Anspruch 3 oder 4, dadurch gekennzeichnet, daß man das Acrylpolymerisat aus 45 bis 70 Gew.-% (a), 5 bis 25 Gew.-% (b) und 20 bis 40 Gew.-% (c) herstellt.

6. Verfahren nach einem der Ansprüche 3 bis 5, dadurch gekennzeichnet, daß man die Polymerisation der teilneutralisierten Acrylsäure mit einem in einer Menge von 0,1 bis 2 Gew.-%, bezogen auf die teilneutralisierte Acrylsäure, eingesetzten selbstvernetzenden Initiator initiiert.

7. Verfahren nach einem der Ansprüche 3 bis 6, dadurch gekennzeichnet, daß man in Gegenwart einer anorganischen Verbindung aus der Reihe weißer Kohlenstoff, Kalk, Hydrotalcit und pulverisierte Kieselsäure vernetzt.

8. Teilchen aus einem wasserabsorbierenden Polymer nach einem der Ansprüche 1 und 2 oder aus einem nach einem Verfahren gemäß einem der Ansprüche 3 bis 7 hergestellten wasserabsorbierenden Polymer, die nach Absorption einer weniger als der Hälfte ihrer Wasserabsorptionskapazität entsprechenden Wassermenge ihre Teilchenform behalten und klebfrei aneinander vorbeigleiten können.

9. Teilchen nach Anspruch 8, dadurch gekennzeichnet, daß sie eine Teilchengröße von 0,03 bis 3,0 mm aufweisen.

## Revendications

1. Polymère absorbant de l'eau sous forme particulaire capable d'absorber de l'eau par clathration, caractérise en ce que le polymère absorbant de l'eau est un polymère acrylique à base d'acide acrylique partiellement neutralisé, et les surfaces des particules polymères sont modifiées de sorte que les particules polymères conservent leur forme particulaire indépendante et soient capables de passer les unes à côté des autres même après absorption d'eau, par incorporation d'un agent dispersant polymère comprenant un copolymère acrylique lié au polymère absorbant de l'eau par une réaction de réticulation dans la préparation dudit polymère en utilisant une quantité d'agent de réticulation qui est de 0,05 à 2 pour cent en poids par rapport à la quantité d'acide acrylique partiellement neutralisé.

2. Polymère absorbant de l'eau particulaire selon la revendication 1, caractérisé en ce que le polymère acrylique absorbant de l'eau est obtenu par une polymérisation en suspension eau dans l'huile en présence de l'agent dispersant polymère à copolymère acrylique.

3. Procédé de production d'un polymère particulaire absorbant de l'eau capable d'absorber de l'eau par clathration, qui comprend les étapes consistant à:
(1) dissoudre un copolymère acrylique en tant qu'agent de dispersion dans un hydrocarbure aliphatique liquide; ledit copolymère acrylique étant formé à partir des composants suivants:
a) un monomère acrylate ou méthacrylate d'alkyle ayant un groupe alkyle de huit atomes de carbone ou plus, en une quantité de 40 à 95 pour cent en poids,
b) un ou plusieurs monomères hydrophiles choisis parmi l'acide acrylique et ses dérivés, l'acide méthacrylique et ses dérivés, l'acrylamide et ses dérivés et le méthacrylamide et ses dérivés, tous contenant un groupe carboxyle, amino, ammonium quaternaire ou hydroxyle, en une quantité de 5 à 40 pour cent en poids, et
c) un monomère insaturé copolymérisable avec les composants (a) et (b) en une quantité de 0 à 40 pour cent en poids;
(2) neutraliser partiellement un monomère acide acrylique en solution aqueuse avec une base pour former une solution aqueuse d'acide acrylique partiellement neutralisé;
(3) disperser la solution aqueuse d'acide acrylique partiellement neutralisé obtenue en (2) dans la solution de copolymère acrylique obtenue en (1), en quantités telles que la quantité de copolymère acrylique de (1) soit de 0,1 à 10 pour cent en poids par rapport à la quantité d'acide acrylique partiellement neutralisé de (2), et polymériser l'acide acrylique par polymérisation en suspension E/H;
(4) soumettre le polymère particulaire obtenu en (3) à une réaction de réticulation avec un agent de réticulation en une quantité de 0,05 à 2 pour cent en poids par rapport à la quantité d'acide acrylique partiellement neutralisé en présence ou en l'absence d'un composé inorganique; et
(5) sécher les particules polymères, les particules polymères conservant ainsi leur forme particulaire indépendante et étant capables de passer les unes à côté des autres même après absorption d'eau.

4. Procédé selon la revendication 3, caractérisé en ce que l'agent de réticulation est l'éthylèneglycoldiglycidyléther.

5. Procédé selon la revendication 3 ou 4, caractérisé en ce que le polymère acrylique est formé à partir de 45 à 70 pour cent en poids de (a), 5 à 25 pour cent en poids de (b) et 20 à 40 pour cent en poids de (c).

6. Procédé selon l'une quelconque des revendications 3 à 5, caractérisé en ce que la polymérisation de l'acide acrylique partiellement neutralisé est amorcée par un amorceur auto-réticulant utilisé en une quantité de 0,1 à 2,0 pour cent en poids sur la base de l'acide acrylique partiellement neutralisé.

7. Procédé selon l'une quelconque des revendications 3 à 6, caractérisé en ce que la réticulation est effectuée en présence d'un composé inorganique choisi parmi le carbone blanc, le talc, l'hydrotalcite, et la silice pulvérisée.

8. Particules d'un polymère absorbant de l'eau selon l'un des revendications 1 et 2 ou d'un polymère absorbant de l'eau produit par un procédé selon l'une quelconque des revendications 3 à 7, contenant de l'eau absorbée en une quantité inférieure à la moitié de leur capacité d'absorption d'eau mais conservant leur forme particulaire et capables de passer les unes à côté des autres sans coller.

9. Particules selon la revendication 10, caractérisées en ce qu'elles ont une granulométrie de 0,03 à 3,0 mm.
